# EUROPÄISCHE PATENTSCHRIFT

(11) **EP 1 807 232 B1**
(45) Veröffentlichungstag und Bekanntmachung des Hinweises auf die Patenterteilung: **15.12.2010**
(21) Anmeldenummer: 05799194.5
(22) Anmeldetag: 12.10.2005
(51) Int. Cl.: B23B 31/20

(54) **SPANNVORRICHTUNG UND VERFAHREN ZUR HERSTELLUNG EINER SPANNVORRICHTUNG**
CLAMPING DEVICE AND METHOD FOR THE PRODUCTION OF A CLAMPING DEVICE
DISPOSITIF DE SERRAGE ET PROCEDE POUR LA PRODUCTION D'UN DISPOSITIF DE SERRAGE

(30) Priorität: 15.10.2004 DE 102004050967
(43) Veröffentlichungstag der Anmeldung: 18.07.2007
(73) Patentinhaber: HAINBUCH GMBH SPANNENDE TECHNIK, D-71672 Marbach (DE)
(72) Erfinder: WELLER, Hans-Michael, 71563 Affalterbach (DE); MANDARELLO, Attilio, 71563 Affalterbach (DE)
(74) Vertreter: Patentanwälte Ruff, Wilhelm, Beier, Dauster & Partner
(86) Internationale Anmeldenummer: PCT/EP2005/010946
(87) Internationale Veröffentlichungsnummer: WO 2006/042670

(56) Entgegenhaltungen:
- EP-A- 0 345 746
- EP-A- 0 773 081
- DE-C1- 10 115 864
- US-A- 5 549 308

## Beschreibung

Die Erfindung betrifft eine Spannvorrichtung, insbesondere ein Spannfutter zur Aufnahme einer Spannzange, mit einem Gehäuse und einer dem Gehäuse zugeordneten Spannzeugaufnahme, sowie ein Verfahren zur Herstellung einer Spannvorrichtung.

Eine bekannte Spannvorrichtung gemäß der DE 100 57 977 A1 ermöglicht die Aufnahme einer als Spannkopf ausgeführten Spannzange. Die Spannvorrichtung weist einen im wesentlichen zylindrischen Futterkörper auf, in dem eine einstückig mit dem Futterkörper verbundene Spannzeugaufnahme vorgesehen ist. An dem Futterkörper ist ein Spindelflansch vorgesehen als Verbindungsglied zwischen der Spannvorrichtung und einer Maschinenspindel einer Bearbeitungsmaschine und der insbesondere für eine kraftübertragende Wirkverbindung zu einer Antriebseinrichtung der Bearbeitungsmaschine vorgesehen ist. Die Spannvorrichtung und die Spannzange weisen korrespondierende Innen- bzw. Außengeometrien auf, die eine formschlüssige Aufnahme der Spannzange in die Spannzeugaufnahme der Spannvorrichtung ermöglichen. An der Spannzeugaufnahme ist eine konische Innengeometrie vorgesehen, die für die Aufnahme der konisch ausgebildeten Außengeometrie der Spannzange ausgebildet ist. Die Spannzange weist mehrere, elastisch miteinander verbundene Spannbacken auf, die für die Aufnahme eines Werkstückes vorgesehen sind und bei Einleitung einer Betätigungskraft auf die Spannzange mittels der korrespondierenden Innen- und Außengeometrie Spannkräfte auf das Werkstück ausüben.

Die bekannte Spannvorrichtung ist insbesondere für die Einspannung von Werkstücken für spanende Bearbeitungsvorgänge vorgesehen, wie sie beispielsweise bei der Dreh- oder Fräsbearbeitung mittels einer Bearbeitungsmaschine ausgeführt werden können. Mit den steigenden Anforderungen an eine Genauigkeit des mit der Spannvorrichtung durchführbaren Spannvorgangs, an eine Bearbeitungsgeschwindigkeit und eine Zerspanungsrate während der Bearbeitung mittels der Bearbeitungsmaschine werden auch wachsende Anforderungen an die Spanneinrichtungen gestellt. Diese Anforderungen werden durch den vermehrten Einsatz von Minimalmengenschmierungs- bzw. Trockenbearbeitungsverfahren weiter gesteigert.

Die US 5549308 A zeigt eine Spannvorrichtung mit einem Gehäuse und einer darin angeordneten Spannzeugaufnahme, die flächig mit einer großen Zylinderfläche aneinander anliegen. In diese Anlagefläche sind in die Spannzeugaufnahmen Umfangsnuten eingeschnitten, in die elastische O-Ringe eingelegt sind, so dass diese auch in der Innenfläche des Gehäuses anliegen.

Die EP 773 081 A1 zeigt eine Spannvorrichtung mit einem Gehäuse und einer darin aufgenommenen Spannzeugaufnahme. Die formschlüssige Verbindung wird mittels Wälzkörpern hergestellt, die in einer flächigen Lagerung gehalten sind.

Die EP 345 746 A1 zeigt eine Spannvorrichtung mit einem Gehäuse und einer Spannzeugaufnahme darin. In der Spannzeugaufnahme kann eine Spannzange aufgenommen werden, die aus einzelnen Segmenten besteht, die miteinander über eine gummielastische Masse dauerhaft verbunden sind.

Die US 4,690,415 beschreibt eine weitere gattungsgemäße Spannvorrichtung, bei der die Spannzeugaufnahme mittels eines Gewindes mit dem Gehäuse der Spannvorrichtung verbunden ist. So wird ein direkter Kraftfluss zwischen Gehäuse, Verbindungsmitteln und Spannzeugaufnahme erreicht.

### Aufgabe und Lösung

Die der Erfindung zugrundeliegende Aufgabe besteht darin, eine Spannvorrichtung sowie ein Herstellungsverfahren dafür zu schaffen, die eine vereinfachte Herstellung und eine verbesserte Anpassung an die Erfordernisse von Werkstückbearbeitungsverfahren ermöglicht und insbesondere einen verbesserten Aufbau aufweist.

Gelöst wird diese Aufgabe durch eine Spannvorrichtung mit den Merkmalen des Anspruchs 1 sowie ein Herstellungsverfahren für eine Spannvorrichtung mit den Merkmalen des Anspruchs 15. Vorteilhafte sowie bevorzugte Ausgestaltungen der Erfindung sind in den weiteren Ansprüchen angegeben und werden im folgenden näher erläutert. Der Wortlaut der Ansprüche wird durch ausdrückliche Bezugnahme zum Inhalt der Beschreibung gemacht. Merkmale, die die Spannvorrichtung und das Herstellungsverfahren beschreiben, werden im folgenden teilweise nur einmal beschrieben. Sie gelten jedoch unabhängig davon sowohl für die Spannvorrichtung als auch für das Herstellungsverfahren.

Erfindungsgemäß ist die Spannzeugaufnahme als separates Bauteil ausgeführt und über Verbindungsmittel aus einem zumindest zeitweise fließfähigen Verbindungsmittelwerkstoff, vorzugsweise Polymerbeton, mit dem Gehäuse verbunden. Durch eine Ausführung als separates Bauteil kann die Spannzeugaufnahme separat vom Gehäuse gefertigt werden, was die Verwendung verschiedener Fertigungsverfahren und Werkstoffe für die Spannzeugaufnahme und für das Gehäuse erlaubt. Die Spannzeugaufnahme kann einstückig oder mehrteilig aufgebaut sein, wodurch eine besonders vorteilhafte Anpassung an die Anforderungen des einzuspannenden Werkstücks bzw. an die Erfordernisse der vorgesehenen Bearbeitungsvorgänge erzielt werden kann. Die Verbindungsmittel, die insbesondere für eine kraftübertragende Wirkverbindung der Spannzeugaufnahme mit dem Gehäuse vorgesehen sind, können durch separate oder andersartige Gestaltung ebenfalls im Hinblick auf ihre Eigenschaften und Kopplungswirkung zwischen Gehäuse und Spannzeugaufnahme auf spezifische Erfordernisse der mit der Spannvorrichtung zu spannenden Werkstücke und durchzuführenden Bearbeitungsvorgänge angepasst werden.

In Ausgestaltung der Erfindung weist ein Werkstoff bzw. Material der Verbindungsmittel eine höhere Dämpfung und/oder eine geringere Dichte als ein Werkstoff des Gehäuses und/oder der Spannzeugaufnahme auf. Dadurch kann erreicht werden, dass bei der Werkstückbearbeitung auftretende, in das Werkstück und in die damit wirkverbundene Spannzange eingeleitete Kraftspitzen und die daraus resultierenden Schwingungen nicht unmittelbar in das Gehäuse und somit auf die Bearbeitungsmaschine übertragen werden. Vielmehr kann eine bedarfsgerechte Bedämpfung dieser Schwingungen durch eine geeignete Auswahl des Werkstoffs der Verbindungsmittel sowie eventuell durch eine entsprechende Gestaltung der Verbindungsmittel vorgesehen sein. Die Bedämpfung wird insbesondere durch eine innere Reibung des Verbindungsmittelwerkstoffs hervorgerufen. Insbesondere bei Bearbeitungsverfahren wie Hartdrehen, bei dem ein besonders hartes und gegebenenfalls sprödes Werkstück zu bearbeiten ist, treten Kraftspitzen und daraus resultierende Schwingungen auf. Diese können beispielsweise einen negativen Einfluss auf Lebensdauer von Antrieben und Lagerungen der Bearbeitungsmaschine haben. Eine Bedämpfung der Kraftspitzen mittels der Spannvorrichtung führt in einfacher Weise zu einer Entlastung der Bearbeitungsmaschine.

Durch eine geringere Dichte des Verbindungsmittelwerkstoffs gegenüber einer Dichte von Werkstoffen des Gehäuses und/oder der Spannzeugaufnahme lässt sich weiters eine Gewichtsreduktion der Spannvorrichtung erzielen. Diese macht sich in vorteilhafter Weise für eine Dynamik der Bearbeitungsmaschine im Hinblick auf Beschleunigungs- und Abbremsvorgänge für das in der Spannvorrichtung aufgenommene Werkstück bemerkbar. Darüber hinaus kann dadurch auch ein positiver Einfluss von der Spannvorrichtung auf die Lagerungen und die Antriebe genommen werden, da eine geringere Masse der Spannvorrichtung mit geringen Krafteinwirkungen auf die Bearbeitungsmaschine einhergeht.

Bei der Erfindung umschließen das Gehäuse und die Spannzeugaufnahme die Verbindungsmittel im wesentlichen, insbesondere in radial umgebender Bauweise. Dadurch wird eine vorteilhafte kraftübertragende Abstützung der Verbindungsmittel an dem Gehäuse und der Spannzeugaufnahme erreicht. Es wird ein direkter Kraftfluss zwischen dem Gehäuse, der Spannzeugaufnahme und den Verbindungsmitteln erreicht. Eine derartige Abstützung und ein entsprechender Kraftfluss ermöglichen eine besonders vorteilhafte Auswahl des Verbindungsmittelwerkstoffs und eine optimierte Gestaltung der Verbindungsmittel, insbesondere im Hinblick auf deren Geometrie. Dadurch wird ein breiter Spielraum für eine Anpassung der Verbindungsmittel und der gesamten Spannvorrichtung an die Erfordernisse von durchzuführenden Bearbeitungsvorgängen erreicht.

In weiterer Ausgestaltung der Erfindung schließt die Spannzeugaufnahme im wesentlichen bündig mit einer durch die Verbindungsmittel und/oder das Gehäuse gebildeten Stirnfläche ab. Dadurch wird ein be - sonders vorteilhafter Kraftfluss zwischen der Spannzeugaufnahme und dem Gehäuse über die Verbindungsmittel sichergestellt. Kräfte, die bei einem Bearbeitungsvorgang eines in der Spannvorrichtung aufgenommenen Werkstücks auftreten und über die Spannzange auf die Spannzeugaufnahme eingeleitet werden und die Anteile orthogonal zu einer Mittellängsachse der Spannvorrichtung aufweisen bzw. Drehmomente, die zumindest nicht ausschließlich um die Mittellängsachse der Spannvorrichtung wirken, müssen über die Verbindungsmittel am Gehäuse abgestützt werden. Bei einem Vorspringen der Spannzeugaufnahme über eine von den Verbindungsmitteln oder dem Gehäuse gebildeten Stirnfläche würde sich ein zusätzlicher Hebelarm zwischen der Spannzeugaufnahme und dem Gehäuse ergeben, der zu höheren Abstützkräften für die Kräfte und Drehmomente führen würde, weshalb die Verbindungsmittel verstärkt ausgeführt werden müssten.

In weiterer Ausgestaltung der Erfindung sind die Verbindungsmittel zumindest im wesentlichen aus einem nichtmetallischen Werkstoff gebildet. Dadurch lassen sich besonders vorteilhafte Eigenschaften der Verbindungsmittel im Hinblick auf deren Dichte und Dämpfung in einem breiten Spektrum entsprechend den an die Spannvorrichtung gestellten Anforderungen vorgeben. Als nichtmetallische Werkstoffe kommen insbesondere Kunststoffe, mit künstlichen und/oder natürlichen Fasern gefüllte Kunststoffe, Naturstoffe und Kombinationen davon in Frage.

In bevorzugter Ausgestaltung der Erfindung ist der nichtmetallische Werkstoff Polymerbeton bzw. Mineralguß, im folgenden allgemein als Poymerbeton bezeichnet. Polymerbeton ist ein Werkstoff, der aus mineralischen Füllstoffen wie Granit, Basalt, Kreide, Quarzkies, Quarzsand oder Gesteinsmehl in jeweils unterschiedlichen Körnungen und einem geringem Anteil von allgemein Reaktionsharzen wie Epoxyd- oder sonstigem Binder besteht. Das Material wird gemischt und als homogene Masse kalt in eine Form vergossen. Polymerbeton zeichnet sich gegenüber anderen Werkstoffen wie beispielsweise Kunststoffen dadurch aus, dass er ein besonders geringes und somit vorteilhaftes Schwundverhalten beim Härten aufweist. Bei einem Übergang aus einem flüssigen oder pastösen Aggregatzustand, in dem eine Verarbeitung vorteilhaft stattfinden kann, in einen festen Aggregatzustand schrumpft Polymerbeton nahezu nicht. Dadurch wird bei einer Einbettung von Bauteilen in Polymerbeton eine besonders vorteilhafte, stoffschlüssige Anbindung dieser Bauteile erreicht. Die Dichte von Polymerbeton ist deutlich geringer als die von üblichen, in der Herstellung von Spannvorrichtungen verwandten Werkstoffen, insbesondere Metallen. Die zumindest zeitweilige pastöse oder flüssige Konsistenz von Polymerbeton erlaubt ein Eingießen in Bauteile und/oder von Bauteilen. Da die Dichte von Stahl bei knapp 8 g/cm³ liegt und die von Polymerbeton bei etwas über 2 g/cm³ liegt, ist neben der vorteilhaften Schwingungseigenschaften und dem Schwundverhalten auch eine Gewichtsersparnis möglich.

In weiterer Ausgestaltung der Erfindung ist die Spannzeugaufnahme an einer Außenkontur und/oder das Gehäuse an einer Innenkontur für eine formschlüssige Verbindung mit den Verbindungsmitteln ausgebildet. Eine formschlüssige Verbindung stellt eine vorteilhafte Kraftübertragung über Normalkräfte oder Normalkraftanteile zwischen dem Gehäuse, den Verbindungsmitteln und der Spannzeugaufnahme sicher. Normalkräfte oder Normalkraftanteile können übertragen werden, sofern die zwischen den Bauteilen zu übertragenden Kräfte zumindest eine anteilige Kraftkomponente aufweisen, die parallel zu einer Flächennormale auf der Innenkontur des Gehäuses oder einer Außenkontur der Spannzeugaufnahme ausgerichtet ist. Eine Übertragung von Normalkräften äußert sich in den betreffenden Bauteilen als Druckkraft. Insbesondere bei der Verwendung von Polymerbeton, der eine hohe Belastbarkeit gegenüber Druckkräften aufweist, wird dadurch eine besonders vorteilhafte Kraftübertragung sicherstellt. Eine formschlüssige Verbindung kann beispielsweise durch Vorsprünge, Hinterschnitte, Ausnehmungen oder Kombinationen davon verwirklicht werden. In einer besonders vorteilhaften Ausführungsform der Erfindung wird eine Verzahnung der Verbindungsmittel mit der Innen- und/oder Außenkontur erreicht. Bei einer Verzahnung stehen eine Vielzahl von Flächen zur Verfügung, die für eine Übertragung von Normalkräften dienen können.

In weiterer Ausgestaltung der Erfindung ist eine Außenkontur der Spannzeugaufnahme und/oder eine Innenkontur des Gehäuses zumindest abschnittsweise polygon geformt. Dadurch wird in besonders vorteilhafter Weise eine formschlüssige Verbindung zwischen dem Gehäuse, den Verbindungsmitteln und der Spannzeugaufnahme erreicht. Eine polygone Außenkontur der Spannzeugaufnahme mit einer Abfolge von gleichmäßigen oder ungleichmäßigen großen, regelmäßig oder unregelmäßig zueinander ausgerichteten Flächenabschnitten kann in einfacher Weise durch umformende oder spanende Bearbeitung wie Schmieden, Fräsen, Schleifen oder Sägen erzielt werden. Eine polygone Ausführung der Innenkontur des Gehäuses ist insbesondere durch Fräsen, Räumen oder durch entsprechende Umformvorgänge zu erzielen.

In weiterer Ausgestaltung der Erfindung weist die Spannzeugaufnahme an einer Stirnseite zumindest eine Stützfläche für eine Abstützung gegenüber dem Gehäuse in axialer Richtung auf. Damit kann sichergestellt werden, dass Axialkräfte, wie sie insbesondere zur Spannung des Spannfutters eingesetzt werden und die durch entgegengerichtete Druckkräfte kompensiert werden müssen, nicht zu unerwünschten Schubkräften in den Verbindungsmitteln führen. Durch eine Stützfläche wird vielmehr eine direkte Abstützung der Spannzeugaufnahme auf dem Gehäuse verwirklicht. Dabei kann ein Zwischenraum zwischen Stützfläche und Gehäuse auch durch Verbindungsmittel ausgefüllt sein, welche jedoch im wesentlichen mit einer Druckbelastung beaufschlagt werden. In einer besonders vorteilhaften Ausführungsform der Erfindung ist die Stützfläche zumindest abschnittsweise kreisringförmig ausgeführt, wodurch eine zusätzliche Abstützung von Kippmomenten, die auf die Spannzeugaufnahme einwirken können, erreicht wird.

In weiterer Ausgestaltung der Erfindung ist an dem Gehäuse eine relativbewegliche Betätigungsvorrichtung für eine Kraftübertragung von einer Maschinenspindel auf ein in der Spannzeugaufnahme einsetzbares Spannfutter vorgesehen. Dadurch wird eine Ansteuerung des Spannfutters durch Betätigungsmittel der Bearbeitungsmaschine ermöglicht. Die Betätigungsmittel können manuell oder fremdkraftbetätigt ausgeführt sein und erlauben eine vorteilhafte, insbesondere automatisierbare Betätigung des Spannfutters. Die Betätigungsvorrichtung kann dazu entsprechend bekannten Ausführungen aufgebaut sein.

In weiterer Ausgestaltung der Erfindung weist die Spannzeugaufnahme eine kegelstumpfförmige Innenkontur auf. Eine kegelstumpfförmige Innenkontur ist insbesondere im Drehverfahren vorteilhaft und präzise herzustellen. Gleiches gilt für die korrespondierende Außenkontur der Spannzange. Durch die kegelstumpfförmige Innenkontur wird auch eine vorteilhafte Selbstzentrierung der Spannzange gegenüber der Spannzeugaufnahme sichergestellt, so dass eine hohe Rundlaufgenauigkeit für das eingespannte Werkstück verwirklicht werden kann.

In weiterer Ausgestaltung der Erfindung weist die Spannzeugaufnahme eine polygone Innenkontur, bevorzugt eine als Pyramidenstumpf ausgeführte Innenkontur, mit zumindest drei Pyramidenstumpfflächen auf. Durch eine polygone Innenkontur und eine korrespondierend ausgeführte Außenkontur der Spannzange wird gegenüber einer kegelstumpfförmigen Innenkontur eine vorteilhafte Flächenberührung der Außenkontur der Spannzange mit der Spannzeugaufnahme erreicht. Bei korrespondierenden kegelstumpfförmigen Konturen der Spannzeugaufnahme und der Spannzange ist lediglich in einem engen Bereich eine flächige Berührung zwischen den Konturen sichergestellt, während es bei Aufnahme eines zu großen oder zu kleinen Werkstücks in die Spannzange lediglich zu einer Linienberührung der Konturen kommt.

Demgegenüber ist bei korrespondierenden polygonen Konturen der Spannzeugaufnahme und der Spannzange sichergestellt, dass nahezu unabhängig von dem in der Spannzange aufgenommenen Werkstück eine flächige Berührung der polygonen Konturen stattfindet, die eine besonders vorteilhafte Übertragung und Abstützung von Kräften und Drehmomenten ermöglicht. Durch eine geringere Flächenpressung zwischen Spannzeugaufnahme und Spannzange, die sich aus der flächigen Berührung der Konturen ergibt, ist auch ein geringerer Verschleiß und eine höhere Belastbarkeit sichergestellt. Die Konturen sind nahezu nicht begrenzend für eine Größe der zu übertragenden Kräfte. Durch die pyramidenstumpfförmige Kontur wird darüber hinaus auch eine formschlüssige Übertragung von Drehmomenten, die um die Mittellängsachse der Spannvorrichtung wirken, ermöglicht. So müssen im Gegensatz zu einer kegelstumpfförmigen Kontur auch keine Zusatzmaßnahmen gegen eine Relativrotation zwischen Spannzange und Spannzeugaufnahme getroffen werden. Der Begriff des Pyramidenstumpfs und der Pyramidenstumpfflächen ist nicht als Begrenzung auf eine pyramidenförmige Kontur zu verstehen, sondern dient lediglich zur Veranschaulichung der im wesentlichen trapezförmigen Innenflächen der Spannzeugaufnahme bzw. der Außenflächen der Spannzange. Die einfachste Form des Pyramidenstumpfs gemäß diesem Verständnis wäre ein Tetraederstumpf, für den jeweils drei Pyramidenstumpfflächen an der Spannzeugaufnahme und der Spannzange vorzusehen sind. In einer bevorzugten Ausführungsform der Erfindung sind die Kanten der aneinandergrenzenden trapezförmigen Flächen an der Spannzange konvex verrundet, während die Kanten der Innenkontur der Spannzeugaufnahme voneinander abgesetzt und durch eine rinnenartige, konkave Ausnehmung miteinander verbunden sind. Dadurch lässt sich eine besonders vorteilhafte und toleranzunkritische Herstellung der Innenkontur bewirken, die zudem durch die rinnenartigen Ausnehmungen weniger anfällig gegenüber Verschmutzungen ist. Darüber hinaus wird auch ein unerwünschter Kontakt der Spannzeugaufnahme mit der Spannzange in den Kantenbereichen vermieden, so dass hier erhöhte Reibung und damit verbundener Verschleiß verringert werden.

In weiterer Ausgestaltung der Erfindung sind die Pyramidenstumpfflächen als separate Führungsplatten ausgeführt. Dadurch ist eine besonders vorteilhafte Materialauswahl und Herstellung der für die Spannzeugaufnahme vorzusehenden Pyramidenstumpfflächen möglich. In einer vorteilhaften Ausführungsform der Erfindung kann beispielsweise bei einer größeren Anzahl von Pyramidenstumpfflächen eine Teilmenge aus einem ersten Werkstoff und eine weitere Teilmenge aus einem zweiten Werkstoff hergestellt werden. Die erste Teilmenge weist beispielsweise besonders vorteilhafte Gleiteigenschafen auf und ist derart in der Spannzeugaufnahme angeordnet, dass ein Kontakt mit der Spannzange zuerst stattfindet. Dagegen weist die zweite Teilmenge, die gegenüber der ersten Teilmenge etwas zurückgestellt ist, eine große Festigkeit auf und erlaubt dadurch die Übertragung von hohen Drehmomenten und Kräften.

In weiterer Ausgestaltung der Erfindung weisen die Führungsplatten Schmierkanäle auf. Dadurch ist beim Einsetzen der Spannzange sichergestellt, dass eine ausreichende Menge an Schmiermittel zwischen den Außenkonturen der Spannzange und den Innenkonturen der Spannzeugaufnahme zur Verfügung steht, so dass wegen der verringerten Reibung eine besonders exakte Einstellung der Spannkraft ermöglicht wird. In den Führungsplatten können auch Schmiernuten vorgesehen werden, die über Schmierkanäle versorgt werden. Durch die Schmiernuten kann sichergestellt werden, dass Schmutzpartikel, die auf den korrespondierenden Konturen angelagert sind, beim Einsetzen der Spannzange in die Spannzeugaufnahme in die Schmiernuten geschoben werden und somit nicht beim Spannen des Werkstücks in die Pyramidenstumpfflächen gedrückt werden und diese beschädigen.

In weiterer Ausgestaltung der Erfindung sind die Führungsplatten zur Aufnahme von Wälzkörpern ausgebildet. Damit lässt sich aufgrund einer nahezu hysteresefreien Spannkraftübertragung zwischen der Spannvorrichtung und der Spannzange eine besonders vorteilhafte Spannkraftregelung verwirklichen. Die Wälzköper reduzieren die ansonsten auftretende Gleitreibung zwischen den korrespondierenden Konturen auf eine Rollreibung, die wesentlich kleiner als die Gleitreibung ist. Dadurch kann insbesondere eine vorteilhafte Anpassung der auf die Spannzange und das Werkstück einwirkenden Spannkraft vorgenommen werden. Es wird beispielsweise eine Spannkrafteinstellung oder ggf. eine Spannkraftregelung mit veränderlicher Spannkraft während des Fertigungsprozesses ermöglicht, so dass ein Werkstück bei Schrupparbeiten mit hohen Bearbeitungskräften auch dementsprechend fest gespannt werden kann. Bei nachfolgenden Feinbearbeitungsvorgängen dagegen wird nur eine minimale Spannkraft von der Spannvorrichtung auf das Werkstück ausgeübt, um Deformationen des Werkstücks zu minimieren. Die Wälzkörper können zu diesem Zweck fest in die Führungsplatten integriert werden oder in Form von Wälzkörpermatten, d.h. in einem flexiblen Material eingebetteten Wälzkörpern, auf die Führungsplatten aufgelegt und so zwischen Spannzeugaufnahme und Spannzange vorgesehen werden. Die Wälzkörper können insbesondere als Wälznadeln ausgeführt sein, die eine vorteilhafte, durch Linienberührung geprägte Kraftübertragung zwischen den korrespondierenden Konturen ermöglichen.

In weiterer Ausgestaltung der Erfindung sind die Schmierkanäle über im Gehäuse vorgesehene Schmierungsbohrungen mit Schmiermittel versorgbar, wobei die Schmierungsbohrungen zumindest teilweise für eine Fixierung der Führungsplatten während eines Gießvorgangs einsetzbar sind. Durch Schmierungsbohrungen im Gehäuse wird eine besonders vorteilhafte, integrale Versorgung der Schmierkanäle sichergestellt, es müssen zu diesem Zweck keine Rohrleitungen an der Spannvorrichtung angebracht werden.

Bei einer Gestaltung der Spannzeugaufnahme mit Führungsplatten, die als Einzelteile in dem Gehäuse der Spannvorrichtung vorgesehen sind, wird eine Ausrichtung der Führungsplatten wesentlich erleichtert, wenn die Führungsplatten mittels lösbarer oder nichtlösbarer Verbindungen mit dem Gehäuse verbunden werden können. Besonders vorteilhaft ist es, wenn zu diesem Zweck Bohrungen genutzt werden können, die ohnehin im Gehäuse vorzusehen sind, wie dies bei den Schmierungsbohrungen der Fall ist. In den Schmierungsbohrungen können beispielsweise Gewinde eingeschnitten sein, in die Befestigungsschrauben für die Führungsplatten eingeschraubt werden, um die Führungsplatten zumindest zeitweilig zu fixieren. Dies ist von besonderem Interesse, wenn die Führungsplatten durch das Eingießen von zumindest zeitweilig flüssigen oder pastösen Verbindungsmitteln wie beispielsweise Polymerbeton mit dem Gehäuse verbunden werden sollen.

In weiterer Ausgestaltung der Erfindung ist das Gehäuse aus einem nichtmetallischen Werkstoff aufgebaut, bevorzugt aus einem Kunststoffmaterial, besonders bevorzugt aus einem karbonfaserverstärken Kunststoffmaterial. Dadurch kann eine Reduzierung des Gewichts des Gehäuses erzielt werden, wobei sich eine besonders vorteilhafte Gestaltung der Spannvorrichtung ergibt, wenn das Gehäuse als Wickelkörper aus karbonfaserverstärktem Kunststoffmaterial auf einen als Wickeldorn dienenden Spindelflansch aufgebracht ist und über Polymerbeton als Verbindungsmittel mit der Spannzeugaufnahme verbunden ist.

Das Verfahren zur Herstellung einer Spannvorrichtung weist folgende Schritte auf: Positionieren einer Spannzeugaufnahme relativ zu einem Gehäuse, Auffüllen eines Zwischenraumes zwischen Gehäuse und Spannzeugaufnahme mit einem zumindest zeitweise fließfähigen Verbindungsmittelwerkstoff. Dadurch können Werkstoffe als Verbindungsmittel eingesetzt werden, die zumindest zeitweilig eine flüssige oder pastöse Konsistenz aufweisen, und die dadurch in vorteilhafter Weise eine Anbindung der Spannzeugaufnahme an das Gehäuse ermöglichen, beispielsweise vorgenannte Werkstoffe. Dabei ist es unerheblich, wie der fließfähige Zustand bzw. der anschließende, im wesentlichen feste Zustand des Verbindungsmittels herbeigeführt wird. Dies kann durch Schmelzen, durch Vermengen mehrerer Komponenten oder durch Härten mittels Energiezufuhr geschehen. Die Positionierung der Spannzeugaufnahme vor dem Vergießen relativ zum Gehäuse stellt die an die Spannvorrichtung zu stellende Genauigkeit sicher.

In weiterer Ausgestaltung der Erfindung wird für die Positionierung der Spannzeugaufnahme gegenüber dem Gehäuse eine Positioniereinrichtung eingesetzt. Die Positioniereinrichtung ermöglicht eine Ausrichtung der Spannzeugaufnahme gegenüber dem Gehäuse, insbesondere durch Formschluss. Dabei können an der Spannzeugaufnahme und/oder am Gehäuse entsprechende Schnittstellen vorgesehen sein, die eine exakte Ausrichtung der Positioniervorrichtung ermöglichen.

In weiterer Ausgestaltung der Erfindung werden Führungsplatten, die zur Bildung der Spannzeugaufnahme vorgesehen sind, an der Positioniereinrichtung befestigt. Während bisher die Fertigung einer mit einer pyramidenstumpfförmigen Spannzeugaufnahme versehenen Spannvorrichtung aufwendig und teuer war und insbesondere durch kostspielige Fertigungsvorgänge wie Erodieren oder in Form einer aufwendigen und toleranzkritischen gebauten Konstruktion ausgeführt werden musste, kann nun durch die zumindest zeitweilig fließ- oder gußfähigen Verbindungsmittel, insbesondere mit Hilfe der Polymerbetontechnik, ein entsprechender Aufbau besonders kostengünstig hergestellt werden. Die Spannzeugaufnahme besteht aus einer Anordnung von mehreren Führungsplatten, die vor dem Einbringen des Verbindungsmittels mit einer Positioniereinrichtung pyramidenstumpfartig angeordnet und anschließend hintergossen werden. Durch die Vorfixierung der Führungsplatten, insbesondere durch Anschrauben, wird eine vorteilhafte Handhabung der Führungsplatten erreicht. Die Führungsplatten werden an der sehr genau gefertigten Positioniervorrichtung befestigt. Diese bildet somit ihre Genauigkeit auf die spätere Lage der Führungsplatten im Gehäuse ab. Die Befestigung der Positioniervorrichtung erfolgt dabei durch die Schmierbüchse. Diese hat ein Innengewinde und dient als eine Art verlorener Befestigungsmutter. Die Schmierbüchse kann im Futter verbleiben und später als Schmierkanal zu den Führungsplatten dienen.

In weiterer Ausgestaltung der Erfindung wird die Positioniereinrichtung als Halterung für eine Weiterbearbeitung von Konturen des Gehäuses und/oder der Spannzeugaufnahme eingesetzt. Dadurch wird eine besonders präzise Ausrichtung derjenigen Geometrien an der Spannvorrichtung erzielt, die für die Anbringung an der Maschinenspindel vorgesehen sind und daher einen großen Einfluss auf wichtige Eigenschaften wie den Rundlauf und Planlauf der Spannvorrichtung haben. Diese Geometrien werden beispielsweise am Spindelflansch nach Durchführung des Gießvorgangs und der dadurch bewirkten Festlegung der Führungsplatten durchgeführt und ermöglichen eine auf die Symmetrieachse des Pyramidenstumpfs ausgerichtete Bearbeitung.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: in perspektivischer Ansicht eine Spannvorrichtung mit einer pyra- midenstumpfförmigen Innenkontur der Spannzeugaufnahme,
- Fig. 2: in ebener Schnittdarstellung die Spannvorrichtung gemäß Fig. 1,
- Fig. 3: in einem perspektivisch dargestellten Halbschnitt die Spannvor- richtung gemäß Fig. 1 und 2,
- Fig. 4: in perspektivischer Ansicht eine Spannvorrichtung mit pyrami- denstumpfförmiger Innenkontur und Wälzkörpern auf den Füh- rungsflächen,
- Fig. 5: in ebener Schnittdarstellung die Spannvorrichtung gemäß Fig. 4,
- Fig. 6: eine Spannvorrichtung mit einer kegelstumpfförmigen Innenkon- tur der Spannzeugaufnahme in einer perspektivischen Darstel- lung ähnlich Fig. 1 und
- Fig.7: einen perspektivischen Schnitt durch die Spannmittelaufnahme mit eingesetzter Positioniereinrichtung und darauf befestigten Führungsplatten.

### Detaillierte Beschreibung der Zeichnungen

Eine Spannvorrichtung 1 weist ein im wesentlichen zylindrisch geformtes, als Grundkörper ausgeführtes Gehäuse 2 auf. An dem Gehäuse 2 ist eine stirnseitige Vertiefung vorgesehen, die einen Aufnahmebereich für eine Spannzeugaufnahme 3 bildet. An einer der Vertiefung abgewandten Stirnseite des Gehäuses 2 ist ein nicht näher dargestellter Spindelflansch für eine Ankopplung an eine nicht dargestellte Maschinenspindel einer Bearbeitungsmaschine vorgesehen. In dem Gehäuse ist eine zentrische Bohrung 4 vorgesehen, die als Durchtritt für eine nicht dargestellte und an sich bekannte Betätigungsvorrichtung dienen kann.

Die Spannzeugaufnahme 3 weist sechs im wesentlichen rechteckige und somit auch trapezförmige Pyramidenstumpfflächen auf, die als Führungsplatten 5 ausgeführt sind. Die Führungsplatten 5 sind in regelmäßiger Abfolge und mit einem gegenüber einer Mittellängsachse 6 gleichen Winkel 7 in dem Aufnahmebereich angeordnet. Eine kraftübertragende, formschlüssige Verbindung zwischen dem Gehäuse 2 und den Führungsplatten 5 wird durch Verbindungsmittel 8 hergestellt, die aus Polymerbeton bestehen und zwischen das Gehäuse 2 und die Führungsplatten 5 eingebracht sind. Um eine vorteilhafte Kraftübertragung zwischen dem Gehäuse 2 und den Führungsplatten 5 sicherzustellen, sind am Gehäuse 2 in Richtung der Mittellängsachse weisende, zylinderabschnittsförmige Auswölbungen 9 vorgesehen, die jeweils stirnseitig mit einer Gewindebohrung 10 versehen sind und die eine formschlüssige Verbindung mit den Verbindungsmitteln 8 ermöglichen. Die Führungsplatten 5 sind derart angeordnet, dass sie an fünf von sechs Seiten in Kontakt mit den Verbindungsmitteln 8 stehen und somit ebenfalls eine formschlüssige Verbindung sicherstellen.

An einer im Aufnahmebereich des Gehäuses 2 vorgesehenen Innenfläche 11, die sich in radialer Richtung erstreckt, stehen die Führungsplatten 5 flächig mit dem Gehäuse 2 in Verbindung, um die vorteilhafte Übertragung von Axialkräften sicherzustellen und bilden damit eine Stützfläche. So kann ein Entstehen von schädlichen Scherkräften in axialer Richtung auf die Verbindungsmittel vermieden werden. Dabei ist eine dünne Verbindungsmittelschicht zwischen den Führungsplatten 5 und der Innenfläche 11 vorgesehen, die zum Ausgleich von Toleranzen dient und die bei Verwendung der Spannvorrichtung lediglich durch Druckkräfte beaufschlagt wird. Durch die rechteckige Ausführung der Führungsplatten 5 in Zusammenhang mit der regelmäßigen Anordnung unter dem Winkel 7 zur Mittellängsachse 6 ergeben sich zwischen den Führungsplatten jeweils im wesentlichen dreiecksförmige Verbindungsabschnitte 12.

In einer nicht dargestellten alternativen Ausführungsform der Erfindung sind die Verbindungsabschnitte 12 jeweils als rinnenförmige, konkave und im wesentlichen kegelstumpfförmige Bereich ausgeführt. Sie ermöglichen somit eine vorteilhafte Entkopplung von Eckbereichen einer in die Spannzeugaufnahme 3 einzusetzenden Spannzange.

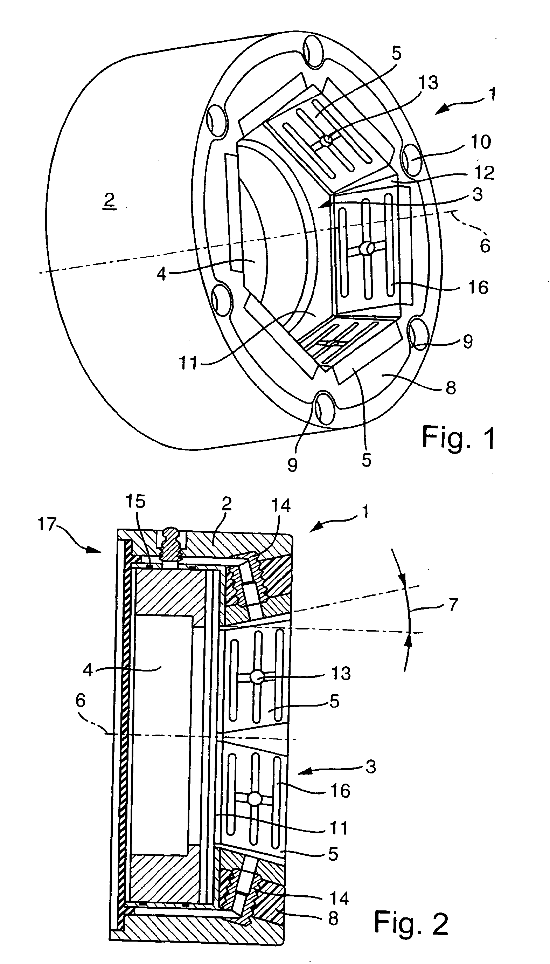

Bei der in Fig. 1 dargestellten Spannvorrichtung 1 ist in den Führungsplatten 5 jeweils ein Schmierkanal 13 vorgesehen, der mit Schmiernuten 16 in Verbindung steht und somit die Verteilung eines durch den Schmierkanal 13 austretenden Schmiermittels auf der Oberfläche der Führungsplatten 5 ermöglicht. Der Schmierkanal 13 steht über eine Schmierbuchse 14 mit einer im Gehäuse 2 vorgesehenen Schmierungsbohrung 15 in Verbindung. Die Schmierbuchse 14 ist als separates Bauteil ausgeführt und mit in das Gehäuse eingegossen. Sie dient neben der Verbindung des Schmierkanals 13 mit der Schmierungsbohrung 15 auch einer Vorfixierung der Führungsplatten 5 vor Einbringung der Verbindungsmittel. Durch die separate Ausführung der Schmierbuchse 14 kann in einfacher Weise die Anzahl der für die Spannzeugaufnahme 3 vorzusehenden Führungsplatten 5 variiert werden. Außerdem gestaltet sich so die Fertigung des im Gehäuse 2 vorzusehenden Aufnahmebereichs besonders einfach.

Die Führungsplatten sind an einer der Innenfläche 11 abgewandten Stirnseite bündig mit einer durch die Stirnseite des Gehäuses gebildeten Fläche ausgeführt. Die Verbindungsmittel 8 ragen ebenfalls nicht über diese Fläche hinaus. Damit wird ein vorteilhafter Kraftfluss zwischen den Führungsplatten 5, die für die Aufnahme von Druckkräften einer nicht dargestellten Spannzange vorgesehen sind, und dem Gehäuse 2 über die Verbindungsmittel 8 erzielt.

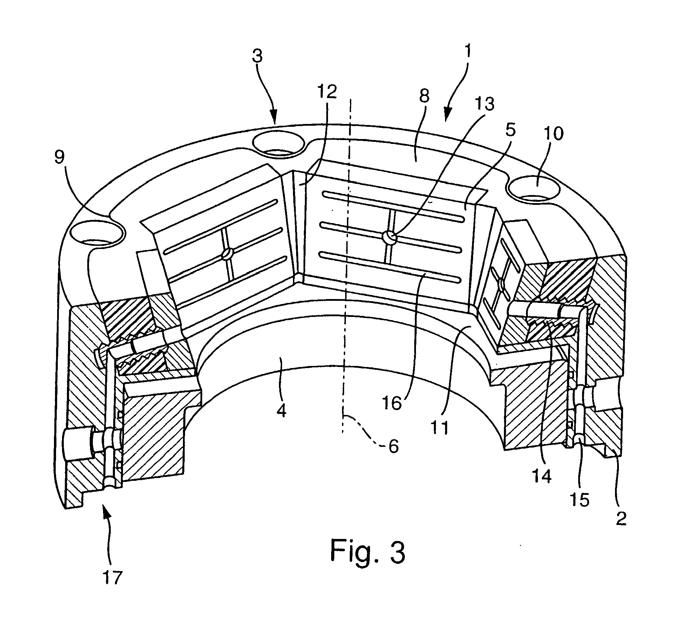

Aus der Schnittdarstellung der Fig. 2 lässt sich entnehmen, dass die Führungsplatten 5 einen im wesentlichen parallelogrammartigen Querschnitt aufweisen und dadurch mit ihren der Innenfläche 11 und der Stirnfläche des Gehäuses 2 zugewandten Oberflächen jeweils parallel zu diesen Flächen und in radialer Richtung ausgerichtet sind. Aus der Fig. 2 kann weiterhin die Anordnung der Bohrung 4 und die Gestaltung des Spindelflansches 17 entnommen werden. Die Darstellung der Fig. 3 verdeutlicht die im Gehäuse 2 vorgesehenen Schmierungsbohrungen 15, die eine Versorgung der Schmiernuten 16 über die Schmierkanäle 13 ermöglichen.

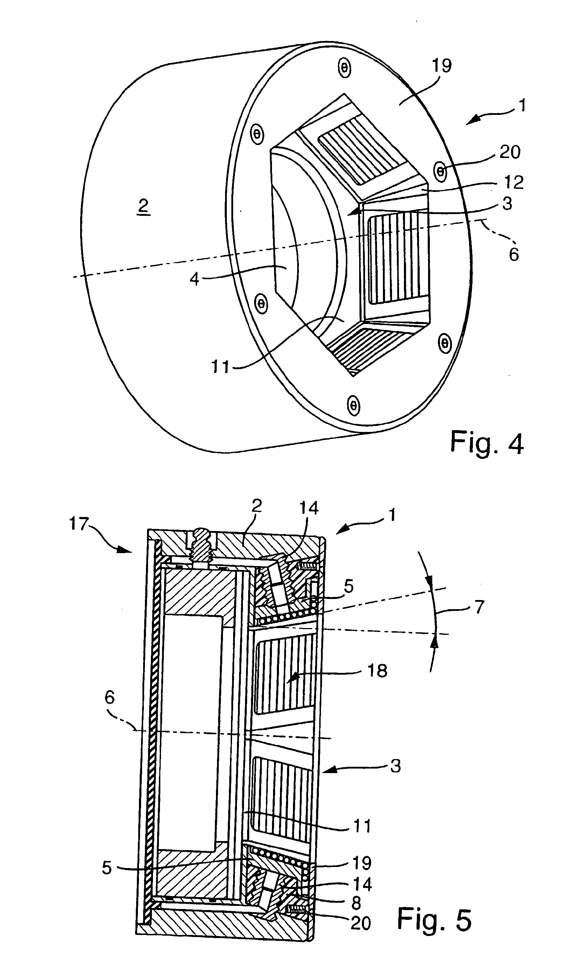

Für die weitere Beschreibung der Fig. 4 bis 7 werden für funktionsgleiche Elemente die bereits für die Fig. 1 bis 3 eingeführten Bezugszeichen weiterverwendet. Abweichend von der in den Fig. 1 bis 3 dargestellten Spannvorrichtung 1 ist bei der in den Fig. 4 und 5 dargestellten Spannvorrichtung 1 eine Anordnung von Wälzkörpern 18 auf den Führungsplatten 5 vorgesehen. Die Wälzköper 18 sind als Wälzkörpermatten angeordnet und werden durch ein elastisches Material, beispielsweise Gummi, miteinander verbunden. Um eine Festlegung der Wälzkörpermatten zu erreichen, ist eine Abdeckplatte 19 vorgesehen, die stirnseitig auf die Spannvorrichtung 1 aufgebracht ist und mit Schrauben 20 befestigt wird. Um eine besonders vorteilhafte Ausrichtung der Wälzkörper 18 zu erreichen, sind die Führungsplatten 5 mit taschenartigen Vertiefungen versehen, die für die Aufnahme der in den Wälzkörpermatten gehaltenen Wälzkörper 18 vorgesehen sind. Durch die Abdeckplatte 19 wird neben der Festlegung der Wälzkörpermatten auch ein Schutz der Verbindungsmittel 8 gegenüber mechanischen Einflüssen und aggressiven Kühl- und/oder Schmiermitteln erreicht.

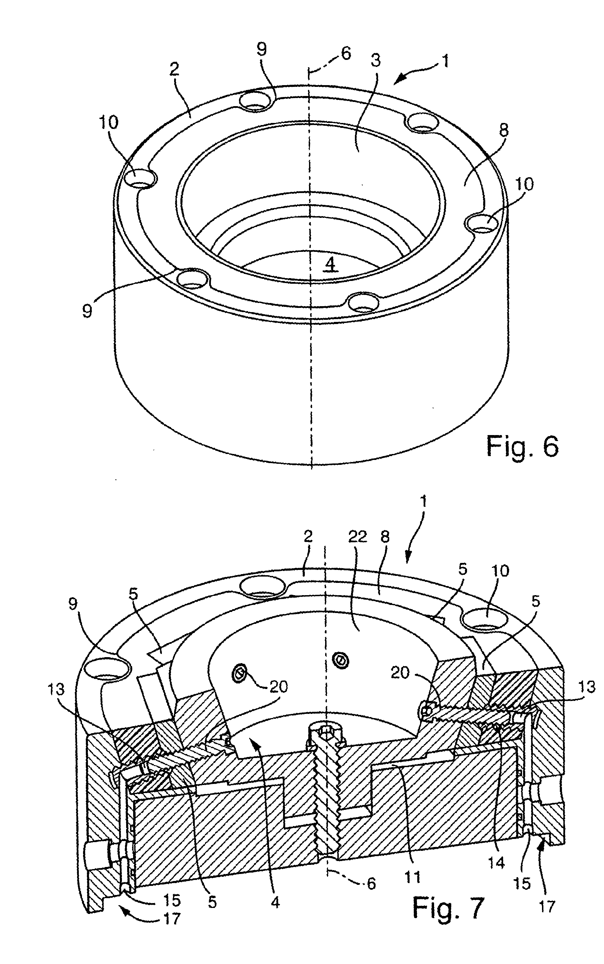

Die in der Fig. 6 dargestellte Spannvorrichtung 1 unterscheidet sich von den Ausführungsformen der Fig. 1 bis 5 durch eine kegelstumpfförmige Innenkontur der Spannzeugaufnahme 3. Diese Kontur ermöglicht die Aufnahme üblicher Spannzangen und findet somit eine besonders universelle Anwendung. Vorteilhaft ist die Spannzeugaufnahme auch von der Außenkontur her rund bzw. kegelig. Um einen verbesserten Formschluss mit den Verbindungsmitteln bzw. dem Polymerbeton 8 zu bewirken, kann die Außenkontur der Spannzeugaufnahme 3 auch anders ausgeführt, sein beispielsweise polygon und pyramidenstumpfförmig oder mit Vorsprüngen bzw. Ausnehmungen odgl.. Dadurch wird eine vorteilhafte Übertragung von Drehmomenten von der Spannzeugaufnahme 3 auf die Verbindungsmittel 8 und somit wiederum auf das Gehäuse 2 unterstützt.

### Herstellungsverfahren

Für eine Herstellung einer erfindungsgemäßen Spannvorrichtung 1 nach Fig. 7 wird zunächst das Gehäuse 2 gefertigt. Bei den vorstehend beschriebenen Ausführungsformen ist das Gehäuse 2 aus einem metallischen Werkstoff, beispielsweise einem Werkzeugstahl, in Frästechnik hergestellt, d.h. der Aufnahmebereich im Gehäuse 2 wird durch Zerspanen freigestellt. Anschließend werden Bohrungen oder Aufnahmen odgl. für die Schmierbuchsen 14 an der Innenseite des Gehäuses 2 eingebracht.

In einem nachfolgenden Schritt werden die Schmierbuchsen 14 als Gegenmuttern für Schrauben 20 an die Rückseite der Führungsplatten 5 gebracht. Durch Bohrungen in der Positioniervorrichtung 22, die eine der Anzahl und Ausrichtung der Führungsplatten 5 entsprechende Außenkontur aufweist, werden die Schrauben 20 durchgeführt und in die Schmierbuchsen 14 eingeschraubt. Pro Führungsplatte ist hierzu mindestens eine Schraube 20 bzw. Verschraubung vorgesehen. So entsteht ein fester und genau ausgerichteter Verbund aus Positioniervorrichtung 22 und Führungsplatten 5.

Anschließend wird die Positioniervorrichtung 22 mit den Führungsplatten 5 in das Gehäuse 2 eingebracht und dabei so genau wie möglich positioniert. Hierzu können nicht dargestellte Hilfsmittel verwendet werden. Beispielsweise könnte auch der dargestellte Eingriff der Schmierbuchsen 14 in Ausnehmungen in der Innenseite des Gehäuses 2 so genau sein, dass dieses als Positionierung dient. Nun kann der Polymerbeton in den Zwischenraum eingebracht werden, der durch Begrenzungen des Aufnahmebereichs und durch die Führungsplatten 5 sowie die Positioniervorrichtung 22 und das Gehäuse 2 gebildet wird.

Nach Aushärten des Polymerbetons wird die Positioniervorrichtung 22 als Verbindungsglied für die Maschinenspindel einer Drehmaschine benutzt, so dass an dem Gehäuse 2 der Spindelflansch 17 und andere Geometrien in exakter Ausrichtung gegenüber den Führungsflächen angebracht werden können. Dadurch wird sichergestellt, dass ein besonders präziser Bezug der polygonen Innenkontur der Spannzeugaufnahme 3 gegenüber dem Spindelflansch 17 erzielt werden kann und somit eine Rund- und Planlauftoleranz der Spannvorrichtung besonders gut ist. Anschließend kann die Positioniervorrichtung entnommen werden und eine Betätigungsvorrichtung in die Bohrung 4 eingesetzt werden. Nach Entnehmen der Schrauben aus den Schmierbuchsen 14 kann die Spannvorrichtung fertigbearbeitet werden. Vorteilhaft können dann die Schmierungsbohrungen 15 vom Spindelflansch her in das Gehäuse 2 und die Schmierbuchsen 14 eingebracht werden. Damit ist die Spannvorrichtung 1 soweit fertig und kann endbearbeitet werden.

## Patentansprüche

1. Spannvorrichtung (1), insbesondere Spannfutter zur Aufnahme einer Spannzange, mit einem Gehäuse (2) und einer dem Gehäuse (2) zugeordneten Spannzeugaufnahme (3), wobei das Gehäuse (2) und die Spannzeugaufnahme (3) Verbindungsmittel (8) im Wesentlichen umschließen oder einschließen, wobei die Spannzeugaufnahme (3) als separates Bauteil ausgeführt und über die Verbindungsmittel (8) mit dem Gehäuse (2) verbunden ist für eine kraftübertragende Abstützung der Verbindungsmittel (8) an dem Gehäuse (2) und der Spannzeugaufnahme (3) für einen direkten Kraftfluss zwischen Gehäuse (2), Verbindungsmitteln (8) und Spannzeugaufnahme (3), **dadurch gekennzeichnet, dass** die Verbindungsmittel (8) zwischen Gehäuse (2) und Spannzeugaufnahme (3) aus einem zumindest zeitweise fließfähigen Verbindungsmittelwerkstoff, vorzugsweise Polymerbeton, bestehen.

2. Spannvorrichtung nach Anspruch 1, **dadurch gekennzeichnet, dass** ein Werkstoff der Verbindungsmittel (8) eine höhere Dämpfung und/oder eine geringere Dichte als ein Werkstoff des Gehäuses (2) und/oder der Spannzeugaufnahme (3) aufweist.

3. Spannvorrichtung nach einem der Ansprüche 1 oder 2, **dadurch gekennzeichnet, dass** die Spannzeugaufnahme (3) im wesentlichen bündig mit einer durch die Verbindungsmittel (8) und/oder das Gehäuse (2) gebildeten Stirnfläche abschließt.

4. Spannvorrichtung nach einem der vorhergehenden Ansprüche, **dadurch gekennzeichnet, dass** die Verbindungsmittel zumindest im wesentlichen einen nichtmetallischen Werkstoff aufweisen.

5. Spannvorrichtung nach einem der vorhergehenden Ansprüche, **dadurch gekennzeichnet, dass** die Spannzeugaufnahme (3) an einer Außenkontur und/oder das Gehäuse (2) an einer Innenkontur für eine formschlüssige Verbindung mit den Verbindungsmitteln (8) ausgebildet ist, wobei vorzugsweise eine Außenkontur der Spannzeugaufnahme (3) und/oder eine Innenkontur des Gehäuses (2) zumindest abschnittsweise polygon geformt ist.

6. Spannvorrichtung nach einem der vorhergehenden Ansprüche, **dadurch gekennzeichnet, dass** die Spannzeugaufnahme (3) an einer Stirnseite zumindest eine, insbesondere zumindest abschnittsweise kreisringförmige Stützfläche für eine Abstützung gegenüber dem Gehäuse (2) in axialer Richtung aufweist.

7. Spannvorrichtung nach einem der vorhergehenden Ansprüche, **dadurch gekennzeichnet, dass** an dem Gehäuse (2) eine relativbewegliche Betätigungsvorrichtung für eine Kraftübertragung von einer Maschinenspindel auf ein in der Spannzeugaufnahme (3) einsetzbares Spannfutter vorgesehen ist.

8. Spannvorrichtung nach einem der vorhergehenden Ansprüche, **dadurch gekennzeichnet, dass** die Spannzeugaufnahme (3) eine kegelstumpfförmige Innenkontur aufweist.

9. Spannvorrichtung nach einem der Ansprüche 1 bis 7, **dadurch gekennzeichnet, dass** die Spannzeugaufnahme (3) eine polygone Innenkontur aufweist, bevorzugt eine als Pyramidenstumpf ausgeführte Innenkontur, mit zumindest drei Pyramidenstumpfflächen (5).

10. Spannvorrichtung nach Anspruch 9, **dadurch gekennzeichnet, dass** die Pyramidenstumpfflächen als separate Führungsplatten (5) ausgeführt sind.

11. Spannvorrichtung nach Anspruch 9 oder 10, **dadurch gekennzeichnet, dass** die Pyramidenstumpfflächen (5) für eine Aufnahme von Wälzkörpern (18) ausgebildet sind, die insbesondere als Wälznadeln ausgeführt sein können.

12. Spannvorrichtung nach einem der Ansprüche 9 bis 11, **dadurch gekennzeichnet, dass** die Spannzeugaufnahme (3), insbesondere die Pyramidenstumpfflächen (5), Schmierkanäle (13) aufweisen.

13. Spannvorrichtung nach einem der vorhergehenden Ansprüche, **dadurch gekennzeichnet, dass** Schmierkanäle (13), die an der Spannzeugaufnahme (3) enden, über im Gehäuse (2) vorgesehene Schmierungsbohrungen (15) mit Schmiermittel versorgbar sind, wobei vorzugsweise die Schmierungsbohrungen zumindest teilweise für eine Fixierung der Spannzeugaufnahme (3) während einer Herstellung der Verbindung mit den Verbindungsmitteln (8) einsetzbar sind.

14. Spannvorrichtung nach einem der vorhergehenden Ansprüche, **dadurch gekennzeichnet, dass** das Gehäuse (2) zumindest teilweise aus einem nichtmetallischen Werkstoff aufgebaut ist, bevorzugt aus einem Kunststoffmaterial, besonders bevorzugt als Wickelkörper aus einem karbonfaserverstärken Kunststoffmaterial.

15. Verfahren zur Herstellung einer Spannvorrichtung (1) nach einem der vorhergehenden Ansprüche mit den Schritten: Positionieren einer Spannzeugaufnahme (3) relativ zu einem Gehäuse (2) und Auffüllen eines Zwischenraumes zwischen Gehäuse und Spannzeugaufnahme mit einem zumindest zeitweise fließfähigen Werkstoff für die Verbindungsmittel (8), vorzugsweise Polymerbeton.

16. Verfahren nach Anspruch 15, **dadurch gekennzeichnet, dass** für die Positionierung der Spannzeugaufnahme (3) gegenüber dem Gehäuse (2) eine Positioniereinrichtung (22) eingesetzt wird, wobei vorzugsweise Führungsplatten (5), die zur Bildung der Spannzeugaufnahme (3) vorgesehen sind, an dem Gehäuse (2) vorfixiert werden und durch die Positioniereinrichtung ausgerichtet werden.

17. Verfahren nach Anspruch 16, **dadurch gekennzeichnet, dass** die Positioniereinrichtung (22) als Schnittstelle für eine Weiterbearbeitung von Konturen des Gehäuses (2) und/oder der Spannzeugaufnahme (3) verwendet wird.

## Claims

1. A chucking device (1), in particular a chuck for receiving a collet chuck, having a housing (2) and a chucking tool receptacle (3) associated with the housing (2), the housing (2) and chucking tool receptacle (3) substantially surrounding or enclosing connecting agents (8), the chucking tool receptacle (3) being produced as a separate component and connected to the housing (2) by the connecting agents (8) for a force-transferring support of the connecting agents (8) on the housing (2) and the chucking tool receptacle (3) for a direct force flux between the housing (2), connecting agents (8) and chucking tool receptacle (3), **characterized in that** the connecting agents (8) between housing (2) and chucking tool receptacle (3) are made of an at least temporarily free-flowing connecting material, preferably polymer concrete.

2. The chucking device according to claim 1, **characterized in that** a material of the connecting agents (8) has a higher damping and/or a lower density than a material of the housing (2) and/or chucking tool receptacle (3).

3. The chucking device according to claim 1 or 2, **characterized in that** the chucking tool receptacle (3) terminates substantially flush with an end face formed by the connecting agents (8) and/or housing (2).

4. The chucking device according to any of the preceding claims, **characterized in that** the connecting agents at least substantially have a nonmetallic material.

5. The chucking device according to any of the preceding claims, **characterized in that** the chucking tool receptacle (3) on an outer contour and/or the housing (2) on an inner contour is constructed for positive connection to the connecting agents (8), preferably an outer contour of the chucking tool receptacle (3) and/or an inner contour of the housing (2) being at least sectionally polygonally shaped.

6. The chucking device according to any of the preceding claims, **characterized in that** on an end side, the chucking tool receptacle (3) has at least one, in particular at least sectionally circular supporting surface for supporting with respect to the housing (2) in the axial direction.

7. The chucking device according to any of the preceding claims, **characterized in that** on the housing (2) is provided a relatively movable operating device for a force transfer from a machine spindle to a chuck insertable in the chucking tool receptacle (3).

8. The chucking device according to any of the preceding claims, **characterized in that** the chucking tool receptacle (3) has a truncated cone-shaped inner contour.

9. The chucking device according to any of claims 1 through 7, **characterized in that** the chucking tool receptacle (3) has a polygonal inner contour, preferably an inner contour in the form of a pyramidal frustum, with at least three pyramidal frustum surfaces (5).

10. The chucking device according to claim 9, **characterized in that** the pyramidal frustum surfaces are implemented as separate guide plates (5).

11. The chucking device according to claim 9 or 10, **characterized in that** the pyramidal frustum surfaces (5) are constructed for receiving rolling bodies (18), which can in particular be in the form of rolling needles.

12. The chucking device according to any of the claims 9 through 11, **characterized in that** the chucking tool receptacle (3), particularly the pyramidal frustum surfaces (5), have lubricating ducts (13).

13. The chucking device according to any of the preceding claims, **characterized in that** the lubricating ducts (13) terminating at the chucking tool receptacle (3) are suppliable with lubricant by means of lubrication holes (15) provided in housing (2), and preferably the lubrication holes can at least partly be used for fixing the chucking tool receptacle (3) whilst making the connection with the connecting means (8).

14. The chucking device according to one of the preceding claims, **characterized in that** the housing (2) is at least partly formed from a nonmetallic material, preferably a plastics material, and in particularly preferred manner as a winding form made of a carbon fibre-reinforced plastics material.

15. A method for the manufacture of a chucking device (1), particularly according to any of the preceding claims, involving the steps: positioning a chucking tool receptacle (3) relative to a housing (2) and filling a gap between the housing and chucking tool receptacle with an at least temporarily free-flowing material for the connecting agents (8), preferably polymer concrete.

16. The method according to claim 15, **characterized in that** a positioning device (22) is used for positioning the chucking tool receptacle (3) relative to the housing (2), and preferably guide plates (5) provided for forming the chucking tool receptacle (3), are prefixed on housing (2) and oriented by the positioning device.

17. The method according to claim 16, **characterized in that** the positioning device (22) is used as an interface for the further machining of contours of the housing (2) and/or chucking tool receptacle (3).

## Revendications

1. Dispositif de serrage (1), notamment mandrin de serrage pour le logement d'une pince de serrage, avec un boîtier (2) et un logement (3) de l'outil de serrage associé au boîtier (2), sachant que le boîtier (2) et le logement (3) de l'outil de serrage entourent ou renferment essentiellement des moyens de raccordement (8), sachant que le logement (3) de l'outil de serrage est réalisé en tant qu'élément de construction distinct et qu'il est raccordé au boîtier (2) par les moyens de raccordement (8) pour un appui à transmission de force des moyens de raccordement (8) au boîtier (2) et au logement (3) de l'outil de serrage pour un flux de force direct entre le boîtier (2), les moyens de raccordement (8) et le logement (3) de l'outil de serrage, **caractérisé en ce que** les moyens de raccordement (8) entre le boîtier (2) et le logement (3) de l'outil de serrage sont constitués en tant que moyen de raccordement d'un matériau au moins temporairement coulant, de préférence de béton au polymère.

2. Dispositif de serrage d'après la revendication 1, **caractérisé en ce qu'**un matériau des moyens de raccordement (8) présente un amortissement plus fort et/ou une densité plus faible qu'un matériau du boîtier (2) et/ou du logement (3) de l'outil de serrage.

3. Dispositif de serrage d'après une des revendications 1 ou 2, **caractérisé en ce que** le logement (3) de l'outil de serrage est affleuré avec la surface frontale constituée par les moyens de raccordement (8) et/ou le boîtier (2).

4. Dispositif de serrage d'après une des revendications précédentes, **caractérisé en ce que** les moyens de raccordement présentent une matière au moins essentiellement non métallique.

5. Dispositif de serrage d'après une des revendications précédentes, **caractérisé en ce que** le logement (3) de l'outil de serrage est réalisé au contour extérieur et/ou le boîtier (2) est réalisé au contour intérieur de manière à permettre un raccordement à engagement positif avec les moyens de raccordement (8), sachant que de préférence un contour extérieur du logement (3) de l'outil de serrage et/ou un contour intérieur du boîtier (2) présente au moins par sections une forme polygonale.

6. Dispositif de serrage d'après une des revendications précédentes, **caractérisé en ce que** le logement (3) de l'outil de serrage présente à sa face frontale au moins une surface de support ayant notamment au moins par sections une forme d'un anneau de cercle pour un support par rapport au boîtier (2) en direction axiale.

7. Dispositif de serrage d'après une des revendications précédentes, **caractérisé en ce qu'**auprès du boîtier (2) on prévoit un dispositif d'actionnement permettant des mouvements relatifs pour la transmission d'une force d'une broche de machine à un mandrin de serrage pouvant être inséré dans le logement (3) de l'outil de serrage.

8. Dispositif de serrage d'après une des revendications précédentes, **caractérisé en ce que** le logement (3) de l'outil de serrage présente un contour intérieur tronconique.

9. Dispositif de serrage d'après une des revendications de 1 à 7, **caractérisé en ce que** le logement (3) de l'outil de serrage présente un contour intérieur polygonal, de préférence un contour intérieur réalisé sous forme de pyramide tronquée avec au moins trois surfaces (5) de pyramide tronquée.

10. Dispositif de serrage d'après la revendication 9, **caractérisé en ce que** les surfaces de pyramide tronquée sont réalisées sous forme de plaques de guidage (5) distinctes.

11. Dispositif de serrage d'après la revendication 9 ou 10, **caractérisé en ce que** les surfaces (5) de pyramide tronquée sont constituées de manière à pouvoir loger des organes de roulement (18), qui peuvent être réalisés comme des aiguilles de roulement.

12. Dispositif de serrage d'après une des revendications de 9 à 11, **caractérisé en ce que** le logement (3) de l'outil de serrage, notamment les surfaces (5) de pyramide tronquée présentent des conduits de lubrification (13).

13. Dispositif de serrage d'après une des revendications précédentes, **caractérisé en ce que** des conduits de lubrification (13) qui se terminent au logement (3) de l'outil de serrage peuvent être alimentés en lubrifiant par des forures de lubrification (15) prévues dans le boîtier (2), sachant que de préférence les forures de lubrification sont utilisables au moins en partie pour une fixation du logement (3) de l'outil de serrage pendant une fabrication du raccordement avec les moyens de raccordement (8).

14. Dispositif de serrage d'après une des revendications précédentes, **caractérisé en ce que** le boîtier (2) est constitué au moins en partie d'un matériau non métallique, de préférence d'une matière plastique, de manière particulièrement préférée en tant que corps enroulé en un matériau plastique à renfort fibre de carbone.

15. Procédé de fabrication d'un dispositif de serrage (1) d'après une des revendications précédentes avec les pas suivants : positionner un logement (3) de l'outil de serrage par rapport à un boîtier (2) et remplir un interstice entre le boîtier et le logement de l'outil de serrage avec un matériau au moins temporairement coulant pour les moyens de raccordement (8), de préférence avec du béton au polymère.

16. Procédé d'après la revendication 15, **caractérisé en ce que** pour le positionnement du logement (3) de l'outil de serrage par rapport au boîtier (2) on utilise un dispositif de positionnement (22), sachant que de préférence des plaques de guidage (5) prévues pour la constitution du logement (3) de l'outil de serrage sont fixées au préalable au boîtier (2) et sont ajustées au moyen du dispositif de positionnement.

17. Procédé d'après la revendication 16, **caractérisé en ce que** le dispositif de positionnement (22) est utilisé en tant que point d'intersection pour un traitement ultérieur des contours du boîtier (2) et/ou du logement (3) de l'outil de serrage.
